# EUROPÄISCHE PATENTANMELDUNG

(11) **EP 4 485 008 A1**
(43) Veröffentlichungstag der Anmeldung: **01.01.2025**
(21) Anmeldenummer: 23181716.4
(22) Anmeldetag: 27.06.2023
(51) Int. Cl.: G01S 17/931

(54) **OPTISCHER FLÄCHEN-SICHERHEITS-SENSOR FÜR AUTONOMES FAHRZEUG**

(71) Anmelder: Leuze electronic GmbH + Co. KG, 73277 Owen/Teck (DE)
(72) Erfinder: Brunner, Rolf, 82223 Eichenau (DE); Mielchen, Alexander, 72768 Reutlingen (DE); Feller, Bernhard, 86316 Friedberg (DE); Wursthorn, Viktor, 72636 Frickenhausen (DE); Sanzi, Dr., Friedrich, 73230 Kirchheim/Teck (DE)
(74) Vertreter: Ruckh, Rainer Gerhard

(57) **Zusammenfassung**

Die Erfindung betrifft eine Sensoranordnung (1) mit zwei an einer beweglichen Einheit angeordneten, diversitären Sensoren, wobei ein erster Sensor ein Sicherheitsdistanzsensor (4) ist, mittels dessen eine Schutzfeldüberwachung durchgeführt wird und/oder zusätzliche Informationen des Fahrzeugstandes eines Fahrzeugs (2) ausgewertet werden. Der zweite Sensor (5) ist ein Bewegungserfassungssensor, der einen Bewegungszustand der beweglichen Einheit erfasst und abhängig hiervon Sensorsignale generiert. In wenigstens einer Rechnereinheit wird aus Distanzsignalen des Sicherheitsdistanzsensors (4) ein erster Datensatz und aus Sensorsignalen des Bewegungserfassungssensors ein zweiter Datensatz generiert, wobei die Datensätze zueinander äquivalente Größen aufweisen. Der Sicherheitsdistanzsensor (4) gibt dann das Schutzfeld (7), in dem die Schutzfeldüberwachung erfolgt, vor, wenn die Größen der Datensätze innerhalb eines Toleranzbereichs übereinstimmen.

## Beschreibung

Die Erfindung betrifft eine Sensoranordnung.

Derartige Sensoranordnungen werden insbesondere zur Gefahrenbereichsüberwachung an gefahrbringenden Anlagen eingesetzt. Insbesondere kann die Anlage von einem Fahrzeug gebildet sein, wobei dann als Gefahrenbereich das Umfeld des Fahrzeugs überwacht wird. Ein Gefahrenbereich an einer solchen Anlage wird mit beispielsweise einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich, sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet oder nicht.

Dieses Objektfeststellungsignal wird an eine Steuerung ausgegeben, die die Anlage, insbesondere das Fahrzeug steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies gilt insbesondere für Fahrzeuge, da sich dort bei der Fahrt des Fahrzeugs laufend andere Umgebungsbedingungen ergeben. In derartigen Fällen sind im optischen Sensor unterschiedliche Schutzfelder abgespeichert, wobei je nach Anforderung das am besten geeignete Schutzfeld aktiviert wird.

Nachteilig hierbei ist zum einen, dass die Schutzfelder vorab konfiguriert sein müssen, damit diese ausgewählt werden können. Dies ist insbesondere dann aufwändig, wenn eine Vielzahl von Schutzfeldern zur Anpassung an unterschiedliche Umgebungsbedingungen benötigt wird.

Ein weiterer wesentlicher Nachteil besteht darin, dass die Auswahl durch externe Einheiten erfolgt, wie z.B. einer Steuerung, insbesondere einer Fahrzeugsteuerung. Hierzu ist ein erheblicher konstruktiver Zusatzaufwand erforderlich. Insbesondere wird der Hardware- und Softwareaufwand der Steuerung erhöht.

Zudem muss in sicherheitstechnischen Applikationen die Auswahl der Schutzfelder fehlersicher erfolgen. Insbesondere ist eine Verifikation von ausgewählten Schutzfeldern erforderlich. Dies erhöht den Aufwand in der Steuerung und auch den Aufwand der Kommunikation zwischen Sensor und Steuerung. Zudem ist dadurch für die Auswahl der Schutzfelder ein erheblicher Zeitaufwand, bedingt durch einen hohen Rechenaufwand, erforderlich.

Der Erfindung liegt die Aufgabe zugrunde eine Sensoranordnung bereitzustellen, die eine sichere und schnelle Anpassung einer Schutzfeldüberwachung an sich verändernde Applikationsbedingungen gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit zwei an einer beweglichen Einheit angeordneten, diversitären Sensoren, wobei ein erster Sensor ein Sicherheitsdistanzsensor ist, mittels dessen eine Schutzfeldüberwachung durchgeführt wird. Alternativ oder zusätzlich wertet dieser Informationen über den Fahrzeugzustand eines Fahrzeugs aus. Der zweite Sensor ist ein Bewegungserfassungssensor, der einen Bewegungszustand der beweglichen Einheit erfasst und abhängig hiervon Sensorsignale generiert. In wenigstens einer Rechnereinheit wird aus Distanzsignalen des Sicherheitsdistanzsensors ein erster Datensatz und aus Sensorsignalen des Bewegungserfassungssensors ein zweiter Datensatz generiert, wobei die Datensätze zueinander äquivalente Größen aufweisen. Der Sicherheitsdistanzsensor gibt dann das Schutzfeld, in dem die Schutzfeldüberwachung erfolgt, vor, wenn die Größen der Datensätze innerhalb eines Toleranzbereichs übereinstimmen.

Die Erfindung betrifft weiterhin ein Verfahren zum Betrieb einer derartigen Sensoranordnung.

Die erfindungsgemäße Sensoranordnung weist einen Sicherheitsdistanzsensor auf. Der Sicherheitsdistanzsensor weist Sensorkomponenten auf, die für eine Distanzmessung ausgebildet sind, wobei diese vorteilhaft nach einem Impuls-Laufzeit-Verfahren oder nach einem Phasenmessverfahren erfolgen kann.

Vorteilhaft ist der Sicherheitsdistanzsensor als optischer Sensor ausgebildet. Dann weist der Sicherheitsdistanzsensor als Sensorkomponenten eine Lichtstrahlen emittierende Sendeeinheit und eine Lichtstrahlen empfangende Empfangseinheit auf. Zur Bestimmung der Distanz eines Objekts wird die Lichtlaufzeit der Lichtstrahlen von der Sendeeinheit zum Objekt und zurück zur Empfangseinheit ausgewertet. Hierzu ist eine Auswerteeinheit vorgesehen, in welcher Sensorsignale der Sensorkomponenten ausgewertet werden. Für den Einsatz im Bereich der Sicherheitstechnik weist die Auswerteeinheit einen fehlersicheren Aufbau auf, beispielsweise in Form zweier sich gegenseitig überwachender Rechnereinheiten.

Die erfindungsgemäße Sensoranordnung kann in sicherheitstechnischen Applikationen, insbesondere im Bereich des Personenschutzes eingesetzt werden und erfüllt hierzu die geltenden normativen Anforderungen.

Der Sicherheitsdistanzsensor bildet die zentrale sicherheitstechnische Komponente der Sensoranordnung. Generell können mit dem Sicherheitsdistanzsensor Objekte innerhalb eines Erfassungsbereichs erfasst werden. Erfindungsgemäß ist die Überwachungsfunktion der Sicherheitsdistanzsensoren derart ausgebildet, dass ein Schutzfeld innerhalb des Erfassungsbereichs überwacht wird. Wird mit dem Sicherheitsdistanzsensor ein Objekteingriff im Schutzfeld detektiert, insbesondere ein Eindringen eines sicherheitskritischen Objekts, wie z.B. einer Person, generiert der Sicherheitsdistanzsensor ein entsprechendes Objektfeststellungssignal, das zum Auslösen einer Sicherheitsfunktion führt.

Die erfindungsgemäße Sensoranordnung ist derart ausgebildet, dass der Sicherheitsdistanzsensor an einer beweglichen Einheit angeordnet ist, deren Vorfeld oder Umfeld mit dem Sicherheitsdistanzsensor überwacht wird.

Die bewegliche Einheit kann ein bewegliches Anlagenteil oder Maschinenteil sein. Weiterhin kann die bewegliche Einheit ein Fahrzeug sein, wie z.B. ein FTS (fahrerloses Transportsystem).

Erfindungsgemäß wird im Sicherheitsdistanzsensor selbst abhängig vom Bewegungszustand der beweglichen Einheit und damit angepasst an die aktuellen Applikationsbedingungen ein Schutzfeld aktiviert, innerhalb dessen mit dem Sicherheitsdistanzsensor eine Schutzfeldüberwachung durchgeführt wird.

Vorteilhaft ist hierbei, dass keine externen Einheiten zur Auswahl des Schutzfelds erforderlich sind. Das aktuelle Schutzfeld wird vielmehr im Sicherheitsdistanzsensor selbst generiert und aktiviert, wodurch eine schnelle Schutzfeld-Umschaltung gewährleistet ist.

Die erfindungsgemäße Schutzfeld-Umschaltung erfolgt zudem fehlersicher.

Erfindungsgemäß weist hierzu die Sensoranordnung neben dem Sicherheitsdistanzsensor einen Beschleunigungssensor auf, mit dem der aktuelle Bewegungszustand der beweglichen Einheit erfasst wird.

Erfindungsgemäß wird in vorgegebenen Zeitintervallen, vorteilhaft fortlaufend, in wenigstens einer Rechnereinheit aus Distanzsignalen des Sicherheitsdistanzsensors ein erster Datensatz und korrespondierend hierzu, d.h. insbesondere zeitgleich, aus Sensorsignalen des Bewegungserfassungssensors ein zweiter Datensatz generiert. Wesentlich hierbei ist, dass die Datensätze äquivalente Größen aufweisen, die den Bewegungszustand der beweglichen Einheit kennzeichnen, d.h. beschreiben.

Vorteilhaft sind die Größen der Datensätze von der Geschwindigkeit und/oder Bewegungsrichtung der beweglichen Einheit gebildet.

Im Sicherheitsdistanzsensor erfolgt eine Vorgabe des Schutzfelds, in dem die Schutzfeldüberwachung erfolgt, dann, wenn die Größen der Datensätze innerhalb eines vorgegebenen Toleranzbereichs übereinstimmen. Dabei bedeutet Vorgabe eines Schutzfelds, dass eine Aktivierung dieses Schutzfelds im Sicherheitsdistanzsensor erfolgt.

Durch den Vergleich der Größen der Datensätze wird die Aktivierung des Schutzfelds mit einem diversitären Sensorsystem, gebildet vom Sicherheitsdistanzsensor selbst und dem Bewegungserfassungssensor, verifiziert. Damit wird eine fehlersichere Aktivierung des Schutzfelds gewährleistet.

Da durch das zweikanalige, diversitär redundante Sensorsystem bestehend aus dem Sicherheitsdistanzsensor und dem Bewegungserfassungssensor eine fehlersichere Generierung der Datensätze gewährleistet ist, ergeben sich für die Hardware und Software der Rechnerstruktur, die abhängig von den Datensätzen Schutzfelder vorgibt und aktiviert, geringere Sicherheitsanforderungen. Beispielsweise kann die Vorgabe der Schutzfelder auf einer separaten Hardwareeinheit erfolgen, deren Software nicht sicher ist. Alternativ kann eine nicht sichere Hardwarestruktur vorgesehen sein, auf der eine sichere Software abläuft.

Da die Datensätze wiederholt in vorgegebenen Zeitabständen, insbesondere fortlaufend, bestimmt werden, stehen diese laufend aktualisiert im Sicherheitsdistanzsensor zur Verfügung, so dass die Schutzfeldumschaltung schnell und an die aktualisierten Applikationsumgebungen angepasst, erfolgen kann.

Vorteilhaft ist die Vorgabe von Schutzfeldern an den Bewegungszustand der beweglichen Einheit angepasst.

Dies bedeutet, dass die neue Aktivierung eines Schutzfelds nicht mit jeden neu generierten Datensätzen erfolgen muss. Vielmehr wird im Sicherheitsdistanzsensor anhand der Datensätze beurteilt, ob sich die Applikationsbedingungen so stark geändert haben, dass eine Änderung des Schutzfelds notwendig ist. Der Sicherheitsdistanzsensor gibt somit anhand der ermittelten Datensätze das Zeitverhalten von Schutzfeld-Umschaltungen vor.

Das im Sicherheitsdistanzsensor vorgegebene und aktivierte Schutzfeld ist von den Größen der Datensätze selbst abhängig, so dass eine Anpassung des Schutzfelds an den Bewegungszustand der beweglichen Einheit gewährleistet ist.

Gemäß einer ersten Variante wird das Schutzfeld im Sicherheitsdistanzsensor aus den ermittelten Datensätzen berechnet. Die Form und Größe des Schutzfelds können bei der Berechnung frei vorgegeben und an die Größen in den Datensätzen angepasst werden. Damit können prinzipiell beliebige und beliebig viele Schutzfelder generiert werden.

Die Berechnung des Schutzfelds erfolgt vorteilhaft mit einer Rechenvorschrift, d.h. einem Algorithmus, der den Anforderungen geltender sicherheitsrelevanter Normen entspricht, so dass auch diesbezüglich eine fehlersichere Generierung eines Schutzfelds gewährleistet ist.

Weiterhin können im Sicherheitsdistanzsensor applikationsspezifische Sonderfälle für die Berechnung des Schutzfelds hinterlegt sein. Ein Beispiel hierfür ist eine bewegliche Einheit in Form eines Fahrzeugs, das durch Lagergassen oder dergleichen fährt. Dann können Restriktionen für die Berechnung der Schutzfelder derart hinterlegt sein, dass die Schutzfeld-Konturen seitlich derart begrenzt werden, dass stationäre Gegenstände, die die Lagergasse seitlich begrenzen, nicht vom Schutzfeld erfasst werden.

Gemäß einer zweiten Variante sind im Sicherheitsdistanzsensor mehrere Schutzfelder hinterlegt, wobei jedes Schutzfeld einem bestimmten Datensatz zugeordnet ist. Diese Zuordnung ist als zweidimensionales Kennlinienfeld in dem Sicherheitsdistanzsensor hinterlegt. Werden während des Betriebs der Sensoranordnung mit dem Sicherheitsdistanzsensor und dem Bewegungserfassungssensor Datensätze generiert, die innerhalb des vorgegebenen Toleranzbereichs übereinstimmen, wird das Schutzfeld ausgewählt und aktiviert, dessen zugeordneter Datensatz im Kennlinienfeld mit den aktuellen Datensätzen übereinstimmt.

Auch in diesem Fall können im Kennlinienfeld Schutzfelder hinterlegt sein, die applikationsspezifischen Randbedingungen Rechnung tragen. Sieht eine Applikation z.B. vor, dass als bewegliche Einheit ein Fahrzeug vorgesehen ist, das durch eine Lagergasse fährt, sind die Konturen der hinterlegten Schutzfelder an die Geometrie der Lagergasse angepasst.

Generell können zur Dimensionierung von zu aktivierenden Schutzfeldern auch Kenngrößen der beweglichen Einheit verwendet werden, wie z.B. Dimension der beweglichen Einheit sowie Beschleunigungs- und Bremsverhalten der beweglichen Einheit.

Gemäß einer vorteilhaften Ausführungsform wird der erste Datensatz des Sicherheitsdistanzsensors für eine Zuordnung zu einem Schutzfeld verwendet. Der zweite Datensatz des Bewegungserfassungssensors wird für eine Überprüfung des Toleranzbereichs verwendet.

Der erste Datensatz wird aus den vom Sicherheitsdistanzsensor ermittelten Distanzwerten gewonnen. Aus einer zeitaufgelösten Anwendung der Distanzwerte werden die Größen des Datensatzes, insbesondere die Geschwindigkeit und/oder Bewegungsrichtung der beweglichen Einheit gewonnen. Diese Messwerterfassung erfolgt fehlersicher und fortlaufend in einem engen Zeittakt, so dass anhand der so gewonnen Datensätze eine zuverlässige Auswahl und Aktivierung von Schutzfeldern erfolgt. Der zweite Datensatz, der aus den Sensorsignalen des Bewegungserfassungssensors gewonnen wird, dient dann lediglich zur Verifizierung und Überprüfung des ersten Datensatzes, was durch die Forderung, dass der erste und zweite Datensatz innerhalb des Toleranzbereichs übereinstimmen müssen, erhalten wird.

Die Auswahl von Schutzfeldern erfolgt generell nur dann, wenn die Datensätze innerhalb des Toleranzbereichs übereinstimmen.

Demgegenüber generiert der Sicherheitsdistanzsensor eine Sicherheitsfunktion, falls die Datensätze nicht innerhalb des Toleranzbereichs übereinstimmen.

Die Sicherheitsfunktion kann z.B. darin bestehen, dass die bewegliche Einheit stillgesetzt wird. In jedem Fall wird mit der Sicherheitsfunktion ein sicherer Zustand der beweglichen Einheit herbeigeführt.

Dadurch werden Gefahrensituationen bedingt durch eine fehlerhafte Aktivierung von Schutzfeldern vermieden.

Je nach Ausbildung des Sicherheitsdistanzsensors erfolgt mit diesem eine Objekterfassung innerhalb eines zwei- oder dreidimensionalen Erfassungsbereichs. Dementsprechend können auch die Schutzfelder zwei oder dreidimensionale Bereiche bilden.

Beispiele für derartige unterschiedliche Sicherheitsdistanzsensoren sind optische Sensoren in Form von Flächendistanzsensoren oder Kamerasensoren. Während mit Flächendistanzsensoren eine Objektdetektion in einem zweidimensionalen Erfassungsbereich erfolgt, kann mit einem Kamerasensor ein dreidimensionaler Erfassungsbereich erfasst werden.

Mit dem Bewegungserfassungssensor kann gemäß einer vorteilhaften Ausgestaltung direkt die Größe des zweiten Datensatzes in Form der Geschwindigkeit bzw. Richtung der beweglichen Einheit erfasst werden. Beispiele hierfür sind Drehratensensoren, Neigungssensoren, Inertialsensoren und dergleichen.

Gemäß einer besonders vorteilhaften Ausgestaltung ist der Bewegungserfassungssensor ein Beschleunigungssensor. Insbesondere kann ein derartiger Beschleunigungssensor vorgesehen sein, der Beschleunigungen in allen drei Raumrichtungen misst.

Durch die Integration der mit dem Beschleunigungssensor gemessenen Beschleunigungswerte wird die Geschwindigkeit der beweglichen Einheit ermittelt. Zudem werden auch die Bewegungsrichtungen der beweglichen Einheit erhalten, die allein oder zusammen mit den ermittelten Geschwindigkeiten die Größen des zweiten Datensatzes bilden.

Bei der Integration der Beschleunigungswerte ergibt sich bei den so erhaltenen Geschwindigkeiten ein Offsetfehler durch die Integrationskonstante.

Dieser Offsetfehler kann durch geeignete Korrekturmaßnahmen eliminiert werden. Beispielsweise kann ein Hilfsintegrator eingesetzt werden, der bei konstanter Geschwindigkeit oder Stillstand der beweglichen Einheit das Integral über den Offset des integralen Beschleunigungssignals bildet.

Alternativ kann der Integrationsfehler anhand vorbekannter Beschleunigungsphasen ermittelt oder korrigiert werden. Ein Spezialfall ist der Stillstand der beweglichen Einheit, nachdem der Sicherheitsdistanzsensor eine Sicherheitsfunktion ausgelöst hat.

Gemäß einer vorteilhaften Ausgestaltung ist der Bewegungserfassungssensor im Sicherheitsdistanzsensor integriert, wobei die Rechnereinheit Bestandteil des Sicherheitsdistanzsensors ist.

In diesem Fall kann die Auswerteeinheit des Sicherheitsdistanzsensors, die aus einer Rechnereinheit oder aus mehreren Rechnereinheiten besteht, die Generierung der beiden Datensätze übernehmen. Ebenso kann die Auswerteeinheit die Aktivierung von Schutzfeldern abhängig vom Vergleich der Datensätze vornehmen.

Gemäß einer alternativen Ausgestaltung bilden der Bewegungserfassungssensor und der Sicherheitsdistanzsensor separate Einheiten.

In diesem Fall ist dem Bewegungserfassungssensor eine Rechnereinheit zugeordnet, in welcher aus den Sensorsignalen des Bewegungserfassungssensors der zweite Datensatz generiert wird. Dieser zweite Datensatz wird in eine Rechnereinheit des Sicherheitsdistanzsensors eingelesen.

Im Sicherheitsdistanzsensor, d.h. in wenigstens einer der Rechnereinheiten des Sicherheitsdistanzsensors erfolgt dann der Vergleich der Datensätze und abhängig hiervon die Aktivierung von Schutzfeldern.

Gemäß einer vorteilhaften Weiterbildung der Erfindung weist der Sicherheitsdistanzsensor eine Schnittstelle auf, über welche die Werte der Datensätze ausgegeben werden.

Die ausgegebenen Werte, insbesondere die Geschwindigkeiten und/oder Bewegungsrichtungen der beweglichen Einheit, können insbesondere für Steuerungsvorgänge verwendet werden, die in einer Steuerung durchgeführt werden, der diese Werte zugeführt werden. Ist die bewegliche Einheit von einem Fahrzeug gebildet, können damit Fahrzeugkomponenten, insbesondere Antriebe gesteuert werden. Separate Encoder für derartige Steuerungsaufgaben können damit eingespart werden.

Die Schnittstelle, über die die Werte ausgegeben werden, ist generell eine Kommunikationsschnittstelle. Diese Kommunikationsschnittstelle kann eine sichere oder nicht sichere Schnittstelle bilden, über die die Werte fehlersicher oder nicht fehlersicher ausgegeben werden können. Beispiele für derartige Kommunikationsschnittstellen und Ethernet-Schnittstellen sind z.B. TCP/IP, UDP oder OPC/UA oder sichere oder nicht sichere Feldbussysteme, wie z.B. Profinet, Profisafe, Ethercat oder FSoE.

Die Erfindung wird im Folgenden anhand der Zeichnungen erläutert. Es zeigen:
- Figur 1:: Ausführungsbeispiel der erfindungsgemäßen Sensoranordnung an einem Fahrzeug.
- Figur 2:: Blockschaltbild der Sensoranordnung gemäß Figur 1.
- Figur 3:: Erstes Beispiel eines Sicherheitsdistanzsensors in Form eines Flächendistanzsensors.
- Figur 4:: Zweites Beispiel eines Sicherheitsdistanzsensors in Form eines Flächendistanzsensors.
- Figur 5:: Beispiel eines Sicherheitsdistanzsensors in Form eines Kamerasensors.
- Figur 6:: Blockdiagramm einer Anordnung zur Auswertung von Beschleunigungssignalen des Beschleunigungssensors der Sensoranordnung.
- Figur 7a, 7b:: Zeitdiagramme für ein Fahrprofil des Fahrzeugs gemäß Figur 1.
- Figur 8a, 8b:: Zeitdiagramme für ein Fahrprofil des Fahrzeugs gemäß Figur 1 mit einer Kompensation von Offset-Fehlern.

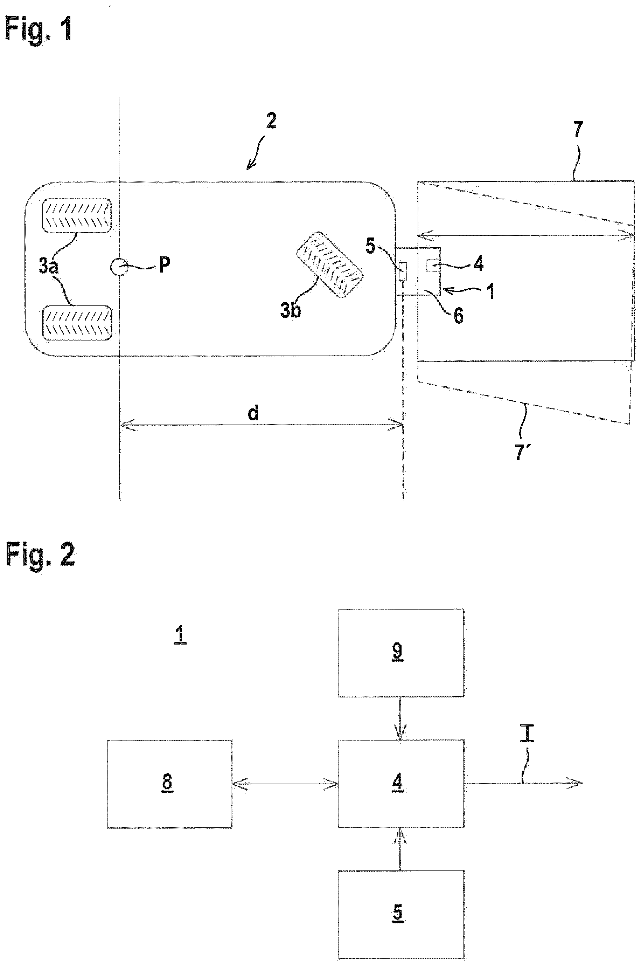

Figur 1 zeigt ein Ausführungsbeispiel der erfindungsgemäßen Sensoranordnung 1 an einem Fahrzeug 2, das beispielsweise von einem fahrerlosen Transportsystem gebildet sein kann.

Das Fahrzeug 2 weist im vorliegenden Fall zwei nicht gelenkte Räder 3a und ein gelenktes Rad 3b auf.

Die Sensoranordnung 1 weist einen Sicherheitsdistanzsensor 4 und als Bewegungserfassungssensor einen Beschleunigungssensor 5 auf, die eine Baueinheit bilden, was jedoch nicht zwingend ist. Im vorliegenden Fall sind der Sicherheitsdistanzsensor 4 und der Beschleunigungssensor 5 in einem gemeinsamen Sensorgehäuse 6 integriert.

In Figur 1 ist mit d der Abstand des Beschleunigungssensors 5 zum gedachten Drehpunkt P bei einer Kurvenfahrt des Fahrzeugs 2 bezeichnet.

Mit dem Sicherheitsdistanzsensor 4 erfolgt eine Schutzfeldüberwachung zur Absicherung des Vorfelds des Fahrzeugs 2. Figur 1 zeigt ein Schutzfeld 7 das bei einer Geradeausfahrt aktiviert ist. Bei einer Kurvenfahrt wird das Schutzfeld 7 derart an die Fahrbewegung angepasst, dass eine seitliche Schutzfeld-Korrektur 7 *'*erfolgt (in Figur 1 gestrichelt dargestellt).

Figur 2 zeigt ein Blockschaltbild der Sensoranordnung 1 gemäß Figur 1. Die zentrale Komponente der Sensoranordnung 1 bildet der Sicherheitsdistanzsensor 4. In den Sicherheitsdistanzsensor 4 werden Signale des Beschleunigungssensors 5 eingelesen. Zudem erfolgt ein bidirektionaler Datenaustausch mit einer Fahrzeugsteuerung 8. Gegebenenfalls werden von zusätzlichen Erfassungssensoren 9 für Fahr- und Lenkbewegungen des Fahrzeugs 2 Informationen in den Sicherheitsdistanzsensor 4 eingelesen. Über die Ausgangsstruktur können Signale an eine Fahrzeugsteuerung 8 oder Anlagensteuerung, in die das Fahrzeug 2 integriert ist, übermittelt werden um einen sicheren Zustand anzufordern. Diese Anforderungen können z.B. ein Fahrzeugstillstand, eine Reduzierung der Geschwindigkeit oder einen Stillstand von Anlage oder Anlagenteilen sein.

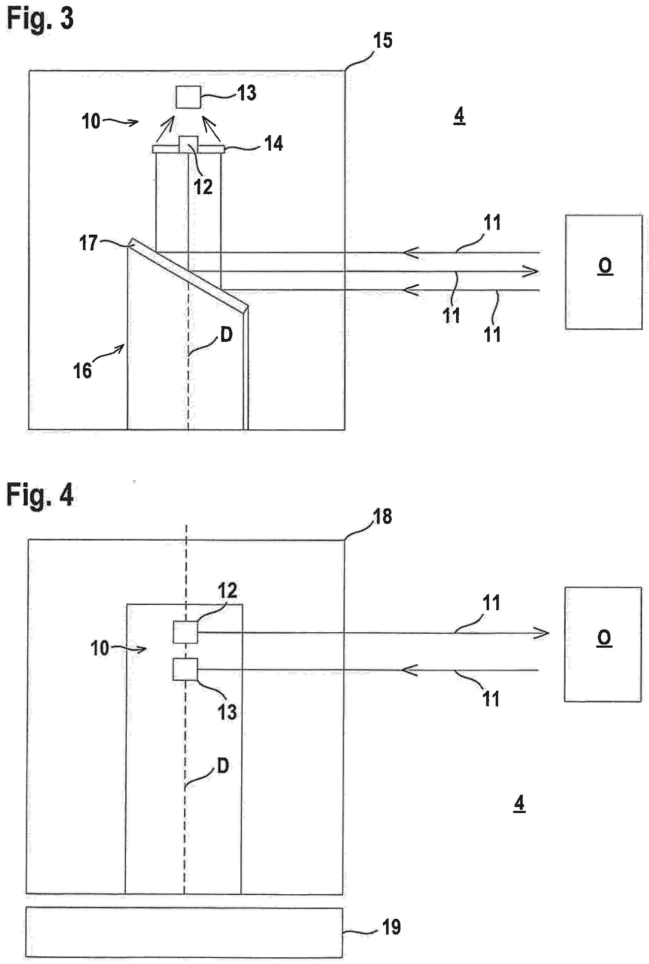

Figur 3 zeigt ein erstes Ausführungsbeispiel des Sicherheitsdistanzsensors 4 in Form eines optischen Sensors, der im vorliegenden Fall in Form eines Flächendistanzsensors ausgebildet ist.

Der optische Sensor weist mindestens eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt O zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Alternativ können Distanzmessungen nach einem Phasenmessverfahren durchgeführt werden.

Figur 4 zeigt eine zweite Ausführungsform des optischen Sensors. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich 5. Ansonsten entspricht der optische Sensor gemäß Figur 4 der Ausführungsform gemäß Figur 3.

Mit dem Sicherheitsdistanzsensor 4 in Form des Flächendistanzsensors wird ein zweidimensionaler Erfassungsbereich erfasst. Dementsprechend erfolgt mit dem Sicherheitsdistanzsensor 4 eine Schutzfeldüberwachung in einem zweidimensionalen Schutzfeld 7.

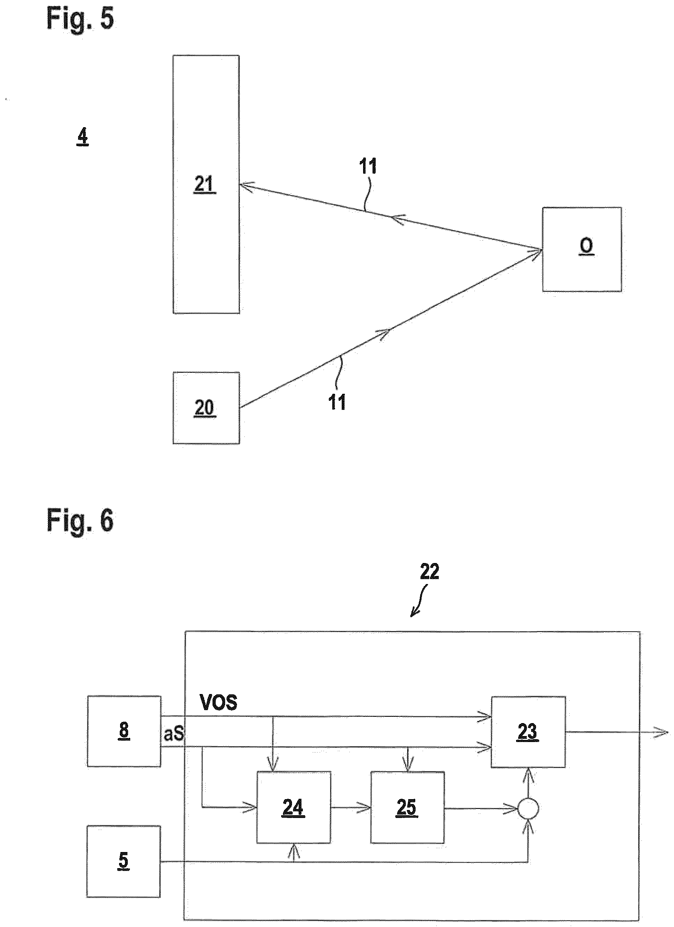

Figur 5 zeigt ein Ausführungsbeispiel des Sicherheitsdistanzsensors 4 in Form eines Kamerasensors. Dieser Kamerasensor weist eine Lichtstrahlen 11 emittierende Sendereinheit 20 und eine Empfangseinheit 21 in Form eines Bildsensors mit einer matrixförmigen Anordnung von Empfangselementen auf. Der Bildsensor kann von einem CMOS- oder CCD Array gebildet sein. Auch in diesem Fall erfolgt mit den Lichtstrahlen 11 eine Distanzmessung, durch Messung der Lichtlaufzeit in jedem Empfangselement.

Mit dem Kamerasensor erfolgt eine Objekterfassung in einem dreidimensionalen Erfassungsbereich. Dementsprechend können die Schutzfelder 7 zwei- oder dreidimensionale Bereiche bilden.

Der Sicherheitsdistanzsensor 4 weist eine Auswerteeinheit auf, in welcher die Empfangssignale des Empfängers 13 bzw. der Empfangseinheit 21 ausgewertet werden. Die Auswerteeinheit weist einen fehlersicheren Aufbau auf. Beispielsweise besteht die Auswerteeinheit aus zwei sich gegenseitig zyklisch überwachenden Rechnereinheiten.

Mit dem Sicherheitsdistanzsensor 4 wird eine Schutzfeldüberwachung durchgeführt. Dabei wird mit dem Sicherheitsdistanzsensor 4 festgestellt, ob ein Objekt O, insbesondere ein sicherheitskritisches Objekt O, im Schutzfeld 7 vorhanden ist oder nicht. Abhängig hiervon generiert der Sicherheitsdistanzsensor 4 als Objektfeststellungssignal ein binäres Schaltsignal, dessen Schaltzustände angeben, ob sich ein Objekt O im Schutzfeld 7 befindet oder nicht. Wird mit dem Sicherheitsdistanzsensor 4 ein Objekt O im Schutzfeld 7 detektiert, entspricht dies einem Gefahrenzustand. Mit dem dadurch generierten Schaltsignal, das über einen Ausgang des Sicherheitsdistanzsensors 4 ausgegeben wird (wie mit dem Pfeil I in Figur 2 veranschaulicht) wird eine Sicherheitsfunktion ausgelöst, die beispielsweise darin besteht das Fahrzeug 2 anzuhalten.

Erfindungsgemäß erfolgt im Sicherheitsdistanzsensor 4 abhängig vom Bewegungszustand des Fahrzeugs 2 eine Schutzfeld-Umschaltung und damit eine Anpassung des Schutzfelds 7 an den aktuellen Bewegungszustand des Fahrzeugs 2. Erfindungsgemäß wird der Bewegungszustand des Fahrzeugs 2 fortlaufend zweikanalig erfasst, wobei hierzu der Sicherheitsdistanzsensor 4 und der Beschleunigungssensor 5 verwendet werden.

Hierzu wird mit dem Sicherheitsdistanzsensor 4 ein erster Datensatz und mit dem Beschleunigungssensor 5 ein zweiter Datensatz generiert. Die Datensätze enthalten äquivalente Größen, die den Bewegungszustand des Fahrzeugs 2 charakterisieren.

Im vorliegenden Fall sind diese Größen von der Geschwindigkeit v und der Bewegungsrichtung des Fahrzeugs 2 gebildet.

Stimmen die Größen beider Datensätze innerhalb eines vorgegebenen, vorteilhaft im Sicherheitsdistanzsensor 4 abgespeicherten Toleranzbereichs überein, wird ein neues Schutzfeld 7 vorgegeben und aktiviert. Dabei ist das vorgegebene Schutzfeld 7 abhängig von den Größen aus den Datensätzen.

Vorteilhaft erfolgt die Vorgabe des Schutzfeldes 7 im Sicherheitsdistanzsensor 4 dadurch, dass dieses aus Größen der jeweiligen Datensätze berechnet wird. Alternativ werden diese aus einer im Sicherheitsdistanzsensor 4 abgespeicherten Zuordnung vorgegebener Schutzfelder 7 zu vorgegebenen Datensätzen ausgewählt.

Insbesondere wird der erste Datensatz des Sicherheitsdistanzsensors 4 für eine Zuordnung zu einem Schutzfeld 7 verwendet. Der zweite Datensatz des Bewegungserfassungssensors wird für eine Überprüfung des Toleranzbereichs verwendet.

In einer weiteren Variante liegt nur ein Datensatz vor. Es werden dann die Ergebnisse des Sicherheitsdistanzsensors 4 und des Beschleunigungssensors 5 oder daraus abgeleitete Bewegungsgrößen verglichen und daraus die Schutzfeldgrö-ßen aus dem einen Datensatz ermittelt.

Zweckmäßig ist die Vorgabe von Schutzfeldern 7 an den Bewegungszustand der beweglichen Einheit angepasst.

Die Vorgabe neuer Schutzfelder 7 erfolgt damit nicht fortlaufend, sondern nur wenn sich der Bewegungszustand des Fahrzeugs 2 signifikant geändert hat.

Um Fehler in der Schutzfeld-Umschaltung zu verhindern generiert der Sicherheitsdistanzsensor 4 eine Sicherheitsfunktion, falls die Datensätze nicht innerhalb des Toleranzbereichs übereinstimmen oder die Bewegungsgrößen nicht innerhalb des Toleranzbereiches übereinstimmen.

Figur 6 zeigt ein Blockdiagramm einer Anordnung 22 zur Auswertung von Beschleunigungssignalen des Beschleunigungssensors 5 der erfindungsgemäßen Sensoranordnung 1.

Die Anordnung 22 kann in einer dem Beschleunigungssensor 5 zugeordneten Rechnereinheit implementiert sein. Die Anordnung 22 mit dem Beschleunigungssensor 5 bildet mit dem Sicherheitsdistanzsensor 4 im vorliegenden Fall eine Baueinheit. Generell können diese auch separate Einheiten bilden.

Die Anordnung 22 umfasst einen Integrator 23, in dem die Beschleunigungssignale des Beschleunigungssensor 5 integriert werden, wodurch die Geschwindigkeit v des Fahrzeugs 2 ermittelt wird.

Bei dieser Integration ergibt sich eine Integrationskonstante und dadurch ein Offset-Fehler bei der Geschwindigkeitsbestimmung. Zur Kompensation dieses Offset-Fehlers weist die Anordnung 22 einen Hilfsintegrator 24 und ein Korrekturmodul 25 für eine Korrekturberechnung auf.

Die Beschleunigungssignale des Beschleunigungssensors 5 werden sowohl dem Integrator 23, als auch dem Hilfsintegrator 24 zugeführt. Von der Fahrzeugsteuerung 8 werden Signale VOS und aS dem Integrator 23 und Hilfsintegrator 24 zugeführt, wobei VOS Stillstandsphasen des Fahrzeugs 2 und aS Phasen konstanter Beschleunigungen des Fahrzeugs 2 sind.

Der Integrator 23 und der Hilfsintegrator 24 integrieren die eingelesenen Beschleunigungssignale.

Bei Phasen konstanter Geschwindigkeit v des Fahrzeugs 2 wird der Hilfsintegrator 24 eingeschaltet, bei Stillstand des Fahrzeugs 2 wird der Integrator 23 stillgesetzt. Im Hilfsintegrator 24 wird bei konstanter Geschwindigkeit v des Fahrzeugs 2 der Offset aufintegriert. Am Ende der Phase konstanter Geschwindigkeit v wird im Korrekturmodul 25 daraus ein Korrektur-Offset berechnet, mit dem die im Integrator 23 berechneten Geschwindigkeitswerte korrigiert werden.

Insbesondere kann die durch die Sicherheitsfunktion des Sicherheitsdistanzsensors 4 ausgelöste Abschaltung, d.h. Stillsetzung des Fahrzeugs 2 zur Offset-Korrektur verwendet werden. Dabei wird der Bremsvorgang des Fahrzeugs 2 abgewartet bis dieses sicher angehalten ist.

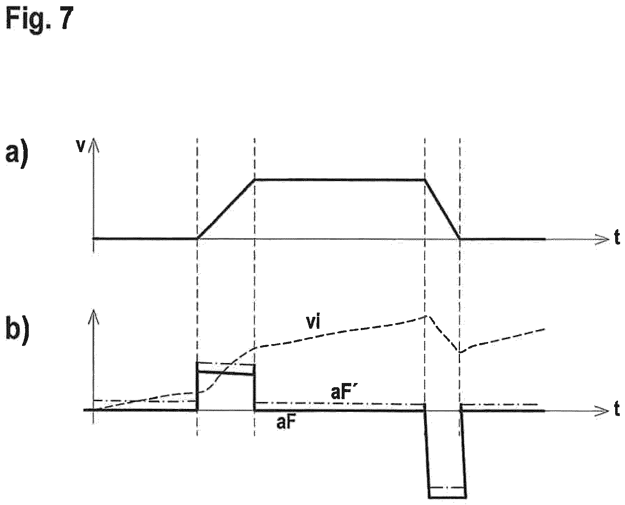

Die Figuren 7a, 7b zeigen Zeitdiagramme für ein typisches Fahrprofil des Fahrzeugs 2.

In Figur 7a ist die Geschwindigkeit v des Fahrzeugs 2 abhängig von der Zeit dargestellt.

Figur 7b zeigt den entsprechenden Verlauf der Beschleunigung des Fahrzeugs 2 abhängig von der Zeit.

Dabei ist mit aF die tatsächliche Beschleunigung dargestellt. Mit aF' ist der Verlauf der Beschleunigung mit Offset-Fehler dargestellt. Mit vᵢ ist der durch Integration der Beschleunigung aF' mit Offset-Fehler erhaltene Geschwindigkeitsverlauf dargestellt.

Wie der Vergleich der Figuren 7a, 7b zeigt, ergeben sich bei langen Integrationszeiten erhebliche Fehler bei der o.g. Bestimmung der Geschwindigkeit v.

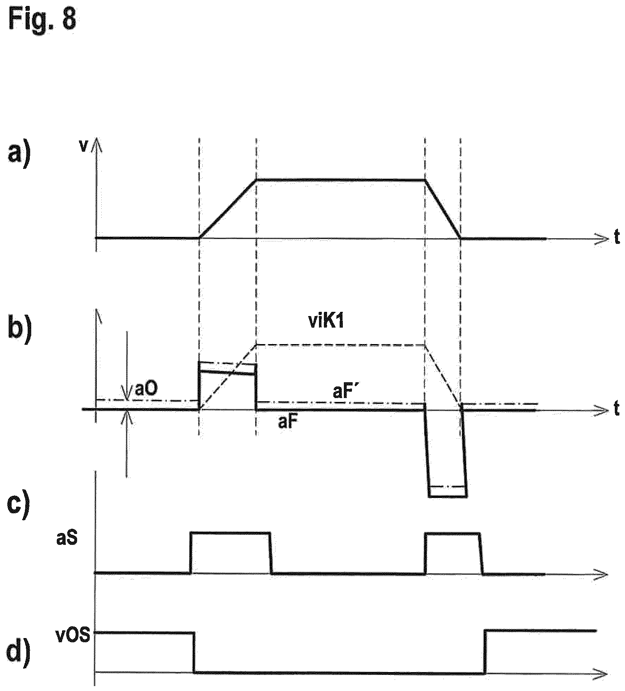

Die Figuren 8a bis 8d zeigen Zeitdiagramme, die die Kompensation von Offset-Fehlern bei der Bestimmung der Geschwindigkeit v des Fahrzeugs 2 durch Integration der Beschleunigungssignale des Beschleunigungssensors 5 veranschaulichen.

Figur 8a entspricht Figur 7a.

Figur 8b zeigt wieder den Verlauf der Beschleunigung aF ohne Offset und der Beschleunigung aF' mit Offset, wobei der Offset mit aₒ berechnet ist.

Die Figuren 8c, 8d zeigen die zeitlichen Verläufe der Signale aS, vOS, die von der Fahrzeugsteuerung 8 in die Anordnung 22 gemäß Figur 6 eingelesen werden.

Diese Signale werden zur Offset-Kompensation mittels des Hilfsintegrators 24 genutzt. Durch diese Offset-Kompensation wird mit der Anordnung 22 gemäß Figur 6 das Offset-kompensierte Geschwindigkeitssignal viK1 erhalten (Figur 8b), das dem tatsächlichen Geschwindigkeitsverlauf gemäß Figur 8a entspricht.

In einer anderen Ausführung kann statt einer Korrektur direkt in den Integrator 23 eingegriffen werden, indem z.B. bei Stillstand oder im Zustand konstanter Geschwindigkeit der Integrationswert des Integrators 23 auf Null gesetzt werden?.

Für die Korrektur bzw. Eingriffe des Integrators 23 können z.B. Informationen der Fahzeugsteuerung 8 und des Fahrzeugzustandes verwendet werden.

Für die bidirektionale Datenübertragung zwischen der Fahrzeugsteuerung 8 und dem Sicherheitsdistanzsensor 4 ist eine Kommunikationsschnittstelle vorgesehen, die als nicht sichere oder sichere Schnittstelle ausgebildet sein kann. Beispielsweise ist die Kommunikationsschnittstelle in Form einer Ethernet-Schnittstelle oder eines Bussystems ausgebildet.

Die mittels der Sicherheitsdistanzsensoren 4 bzw. der Beschleunigungssensoren 5 ermittelten Werte, d.h. Geschwindigkeiten und/oder Bewegungsrichtungen des Fahrzeugs 2 können so an die Fahrzeugsteuerung 8 ausgegeben werden und dort für Steuerungsaufgaben genutzt werden.

### Bezugszeichenliste

- (1): Sensoranordnung
- (2): Fahrzeug
- (3a): Rad
- (3b): Rad (gelenkt)
- (4): Sicherheitsdistanzsensor
- (5): Beschleunigungssensor
- (6): Sensorgehäuse
- (7): Schutzfeld
- (7'): Schutzfeldkorrektur
- (8): Fahrzeugsteuerung
- (9): Erfassungssensor
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Sendeeinheit
- (21): Empfangseinheit
- (22): Anordnung
- (23): Integrator
- (24): Hilfsintegrator
- (25): Korrekturmodul

- (d): Abstand
- (D): Drehachse
- (O): Objekt
- (P): Drehpunkt
- (v): Geschwindigkeit

## Patentansprüche

1. Sensoranordnung (1) mit zwei an einer beweglichen Einheit angeordneten, diversitären Sensoren, wobei ein erster Sensor ein Sicherheitsdistanzsensor (4) ist, mittels dessen eine Schutzfeldüberwachung durchgeführt wird und/oder Informationen des Fahrzeugzustandes eines Fahrzeugs (2) ausgewertet werden, **dadurch gekennzeichnet, dass** der zweite Sensor ein Bewegungserfassungssensor, der einen Bewegungszustand der beweglichen Einheit erfasst und abhängig hiervon Sensorsignale generiert, dass in wenigstens einer Rechnereinheit aus Distanzsignalen des Sicherheitsdistanzsensors (4) ein erster Datensatz und aus Sensorsignalen des Bewegungserfassungssensors ein zweiter Datensatz generiert wird, wobei die Datensätze zueinander äquivalente Größen aufweisen, und dass der Sicherheitsdistanzsensor (4) das Schutzfeld (7), in dem die Schutzfeldüberwachung erfolgt, dann vorgibt wenn die Größen der Datensätze innerhalb eines Toleranzbereichs übereinstimmen.

2. Sensoranordnung (1) nach Anspruch 1, **dadurch gekennzeichnet, dass** das vorgegebene Schutzfeld (7) abhängig von den Größen des Datensatzes ist.

3. Sensoranordnung (1) nach einem der Ansprüche 1 oder 2, **dadurch gekennzeichnet, dass** die Vorgabe des Schutzfeldes (7) im Sicherheitsdistanzsensor (4) dadurch erfolgt, dass dieses aus Größen der jeweiligen Datensätze berechnet wird, oder dass dieses aus einer im Sicherheitsdistanzsensor (4) abgespeicherten Zuordnung vorgegebener Schutzfelder (7) zu vorgegebenen Datensätzen ausgewählt wird.

4. Sensoranordnung (1) nach einem der Ansprüche 1 bis 3, **dadurch gekennzeichnet, dass** die Vorgabe von Schutzfeldern (7) an den Bewegungszustand der beweglichen Einheit angepasst ist.

5. Sensoranordnung (1) nach einem der Ansprüche 1 bis 4, **dadurch gekennzeichnet, dass** der erste Datensatz des Sicherheitsdistanzsensors (4) für eine Zuordnung zu einem Schutzfeld (7) verwendet wird, und dass der zweite Datensatz des Bewegungserfassungssensors für eine Überprüfung des Toleranzbereichs verwendet wird.

6. Sensoranordnung (1) nach einem der Ansprüche 1 bis 5, **dadurch gekennzeichnet, dass** der Sicherheitsdistanzsensor (4) eine Sicherheitsfunktion generiert, falls die Datensätze nicht innerhalb des Toleranzbereichs übereinstimmen und/oder, dass der Sicherheitsdistanzsensor (4) eine Sicherheitsfunktion generiert, falls mittels des Sicherheitsdistanzsensors 4 und des Bewegungserfassungssensors ermittelte Bewegungsgrößen nicht innerhalb des Toleranzbereichs übereinstimmen.

7. Sensoranordnung (1) nach einem der Ansprüche 1 bis 6, **dadurch gekennzeichnet, dass** der Sicherheitsdistanzsensor (4) ein Flächendistanzsensor oder ein Kamerasensor ist.

8. Sensoranordnung (1) nach einem der Ansprüche 1 bis 7, **dadurch gekennzeichnet, dass** das Schutzfeld (7) ein zwei- oder dreidimensionaler Bereich ist.

9. Sensoranordnung (1) nach einem der Ansprüche 1 bis 8, **dadurch gekennzeichnet, dass** der Bewegungserfassungssensor ein Beschleunigungssensor (5), ein Drehratensensor, ein Neigungssensor oder ein Inertialsensor ist.

10. Sensoranordnung (1) nach einem der Ansprüche 1 bis 9, **dadurch gekennzeichnet, dass** die bewegliche Einheit ein bewegliches Maschinen- oder Anlagenteil oder ein Fahrzeug (2) ist.

11. Sensoranordnung (1) nach einem der Ansprüche 1 bis 10, **dadurch gekennzeichnet, dass** die Größen der Datensätze von der Geschwindigkeit (v) und/oder Bewegungsrichtung der beweglichen Einheit gebildet sind.

12. Sensoranordnung (1) nach einem der Ansprüche 1 bis 11, **dadurch gekennzeichnet, dass** der Bewegungserfassungssensor im Sicherheitsdistanzsensor (4) integriert ist, wobei die Rechnereinheit Bestandteil des Sicherheitsdistanzsensors (4) ist.

13. Sensoranordnung (1) nach einem der Ansprüche 1 bis 11, **dadurch gekennzeichnet, dass** der Bewegungserfassungssensor und der Sicherheitsdistanzsensor (4) separate Einheiten bilden.

14. Sensoranordnung (1) nach Anspruch 13, **dadurch gekennzeichnet, dass** dem Bewegungserfassungssensor eine Rechnereinheit zugeordnet ist, in welcher aus den Sensorsignalen des Bewegungserfassungssensors der zweite Datensatz generiert wird, wobei dieser zweite Datensatz in eine Rechnereinheit des Sicherheitsdistanzsensors (4) eingelesen wird.

15. Sensoranordnung (1) nach einem der Ansprüche 1 bis 14, **dadurch gekennzeichnet, dass** der Sicherheitsdistanzsensor (4) eine Schnittstelle aufweist, über welche die Werte der Datensätze ausgegeben werden.

## Geänderte Patentansprüche

### Geänderte Patentansprüche gemäss Regel 137(2) EPÜ.

1. Sensoranordnung (1) mit zwei an einer beweglichen Einheit angeordneten, diversitären Sensoren, wobei ein erster Sensor ein Sicherheitsdistanzsensor (4) ist, mittels dessen eine Schutzfeldüberwachung durchgeführt wird und Informationen des Fahrzeugzustandes eines Fahrzeugs (2) ausgewertet werden, **dadurch gekennzeichnet, dass** der zweite Sensor ein Bewegungserfassungssensor, der einen Bewegungszustand der beweglichen Einheit erfasst und abhängig hiervon Sensorsignale generiert, dass in wenigstens einer Rechnereinheit aus Distanzsignalen des Sicherheitsdistanzsensors (4) ein erster Datensatz und aus Sensorsignalen des Bewegungserfassungssensors ein zweiter Datensatz generiert wird, wobei die Größen der Datensätze von der Geschwindigkeit (v) und/oder Bewegungsrichtung der beweglichen Einheit gebildet sind, so dass die Datensätze zueinander äquivalente Größen aufweisen, und dass der Sicherheitsdistanzsensor (4) das Schutzfeld (7), in dem die Schutzfeldüberwachung erfolgt, dann vorgibt wenn die Größen der Datensätze innerhalb eines Toleranzbereichs übereinstimmen.

2. Sensoranordnung (1) nach Anspruch 1, **dadurch gekennzeichnet, dass** das vorgegebene Schutzfeld (7) abhängig von den Größen des Datensatzes ist.

3. Sensoranordnung (1) nach einem der Ansprüche 1 oder 2, **dadurch gekennzeichnet, dass** die Vorgabe des Schutzfeldes (7) im Sicherheitsdistanzsensor (4) dadurch erfolgt, dass dieses aus Größen der jeweiligen Datensätze berechnet wird, oder dass dieses aus einer im Sicherheitsdistanzsensor (4) abgespeicherten Zuordnung vorgegebener Schutzfelder (7) zu vorgegebenen Datensätzen ausgewählt wird.

4. Sensoranordnung (1) nach einem der Ansprüche 1 bis 3, **dadurch gekennzeichnet, dass** die Vorgabe von Schutzfeldern (7) an den Bewegungszustand der beweglichen Einheit angepasst ist.

5. Sensoranordnung (1) nach einem der Ansprüche 1 bis 4, **dadurch gekennzeichnet, dass** der erste Datensatz des Sicherheitsdistanzsensors (4) für eine Zuordnung zu einem Schutzfeld (7) verwendet wird, und dass der zweite Datensatz des Bewegungserfassungssensors für eine Überprüfung des Toleranzbereichs verwendet wird.

6. Sensoranordnung (1) nach einem der Ansprüche 1 bis 5, **dadurch gekennzeichnet, dass** der Sicherheitsdistanzsensor (4) eine Sicherheitsfunktion generiert, falls die Datensätze nicht innerhalb des Toleranzbereichs übereinstimmen und/oder, dass der Sicherheitsdistanzsensor (4) eine Sicherheitsfunktion generiert, falls mittels des Sicherheitsdistanzsensors (4) und des Bewegungserfassungssensors ermittelte Bewegungsgrößen nicht innerhalb des Toleranzbereichs übereinstimmen.

7. Sensoranordnung (1) nach einem der Ansprüche 1 bis 6, **dadurch gekennzeichnet, dass** der Sicherheitsdistanzsensor (4) ein Flächendistanzsensor oder ein Kamerasensor ist.

8. Sensoranordnung (1) nach einem der Ansprüche 1 bis 7, **dadurch gekennzeichnet, dass** das Schutzfeld (7) ein zwei- oder dreidimensionaler Bereich ist.

9. Sensoranordnung (1) nach einem der Ansprüche 1 bis 8, **dadurch gekennzeichnet, dass** der Bewegungserfassungssensor ein Beschleunigungssensor (5), ein Drehratensensor, ein Neigungssensor oder ein Inertialsensor ist.

10. Sensoranordnung (1) nach einem der Ansprüche 1 bis 9, **dadurch gekennzeichnet, dass** die bewegliche Einheit ein bewegliches Maschinen- oder Anlagenteil oder ein Fahrzeug (2) ist.

11. Sensoranordnung (1) nach einem der Ansprüche 1 bis 10, **dadurch gekennzeichnet, dass** der Bewegungserfassungssensor im Sicherheitsdistanzsensor (4) integriert ist, wobei die Rechnereinheit Bestandteil des Sicherheitsdistanzsensors (4) ist.

12. Sensoranordnung (1) nach einem der Ansprüche 1 bis 10, **dadurch gekennzeichnet, dass** der Bewegungserfassungssensor und der Sicherheitsdistanzsensor (4) separate Einheiten bilden.

13. Sensoranordnung (1) nach Anspruch 12, **dadurch gekennzeichnet, dass** dem Bewegungserfassungssensor eine Rechnereinheit zugeordnet ist, in welcher aus den Sensorsignalen des Bewegungserfassungssensors der zweite Datensatz generiert wird, wobei dieser zweite Datensatz in eine Rechnereinheit des Sicherheitsdistanzsensors (4) eingelesen wird.

14. Sensoranordnung (1) nach einem der Ansprüche 1 bis 13, **dadurch gekennzeichnet, dass** der Sicherheitsdistanzsensor (4) eine Schnittstelle aufweist, über welche die Werte der Datensätze ausgegeben werden.
